# EUROPÄISCHE PATENTSCHRIFT

(11) **EP 4 295 059 B1**
(45) Veröffentlichungstag und Bekanntmachung des Hinweises auf die Patenterteilung: **12.03.2025**
(21) Anmeldenummer: 22701524.5
(22) Anmeldetag: 19.01.2022
(51) Int. Cl.: F16F 15/129, F16F 15/139

(54) **FEDERDÄMPFER MIT ZWEI ÜBERLASTSCHUTZKUPPLUNGEN; SOWIE ANTRIEBSSTRANG**
SPRING DAMPER WITH TWO OVERLOAD PROTECTION COUPLINGS, AND POWERTRAIN
AMORTISSEUR À RESSORT À DEUX ACCOUPLEMENTS DE PROTECTION CONTRE LES SURCHARGES, ET CHAÎNE CINÉMATIQUE

(30) Priorität: 19.02.2021 DE 102021103932
(43) Veröffentlichungstag der Anmeldung: 27.12.2023
(73) Patentinhaber: Schaeffler Technologies AG & Co. KG, 91074 Herzogenaurach (DE)
(72) Erfinder: WALTZ, Nicolas, 67250 Aschbach (FR); BERTHELEME, Mathieu, 67100 Strasbourg (FR)
(86) Internationale Anmeldenummer: PCT/DE2022/100048
(87) Internationale Veröffentlichungsnummer: WO 2022/174861

(56) Entgegenhaltungen:
- EP-A2- 2 765 331

## Beschreibung

Die Erfindung betrifft einen Federdämpfer für einen Kraftfahrzeugantriebsstrang, vorzugsweise für einen hybriden Antriebsstrang eines Kraftfahrzeuges, wie eines Pkws, Lkws, Busses oder sonstigen Nutzfahrzeuges, mit einem Primärteil, einem relativ zu dem Primärteil federgedämpft verdrehbar aufgenommenen Sekundärteil und einer zwischen dem Sekundärteil und einem Nabenelement wirkend eingesetzten, ersten Überlastschutzkupplung, die unterhalb eines Grenzwertes eines zu übertragenden Drehmomentes permanent geschlossen ist und oberhalb dieses Grenzwertes, zumindest bei einem impulshaften Auftreten des zu übertragenden Drehmomentes, eine Relativverdrehung zwischen dem Sekundärteil und dem Nabenelement freigibt. Zudem betrifft die Erfindung einen Antriebsstrang mit diesem Federdämpfer.

Gattungsgemäße in Antriebssträngen eingesetzte Federdämpfer sind aus dem Stand der Technik bereits hinlänglich bekannt. Beispielsweise offenbart die EP 2 765 331 A2 eine Leistungsübertragungsvorrichtung mit einem Dämpfungsbestandteil, einem Hystereseerzeugungsbestandteil sowie einem Drehzahlbegrenzungsbestandteil.

Somit sind bereits Federdämpfer mit Drehmomentbegrenzern in Form von Überlastschutzkupplungen bekannt, wobei die Drehmomentbegrenzer auch an verschiedenen Positionen einsetzbar sind. Hierbei hat es sich jedoch herausgestellt, dass die verwendeten Federdämpfer häufig einen relativ komplexen Aufbau mit einer großen Bauteilanzahl sowie einer relativ großen Massenträgheit aufweisen. Die Drehmomentbegrenzer sind ferner meist möglichst nahe an den Dämpferfedern platziert, um bei einem Drehmomentimpuls diesen Bereich ausreichend zu schützen. Dies führt jedoch dazu, dass der mit der Getriebeeingangswelle im Betrieb weiter verbundene Bestandteil des Federdämpfers ein relativ großes Massenträgheitsmoment besitzt, was wiederum seitens der Getriebeeingangswelle und von dort weiter im Getriebe zu relativ hohen Drehmomentbelastungen führen kann. Die Getriebeeingangswelle und folglich die im Getriebe anschließenden Elemente, wie Zahnräder, etc. können dadurch in bestimmten Betriebszuständen überlastet werden.

Es ist daher Aufgabe der vorliegenden Erfindung, einen möglichst robust und langlebig einsetzbaren Federdämpfer zur Verfügung zu stellen, der auch bei Auftreten von Drehmomentimpulsen eine Überbelastung eines im Betrieb anschließenden Getriebes verhindert.

Dies wird erfindungsgemäß dadurch gelöst, dass radial innerhalb der ersten Überlastschutzkupplung eine zweite Überlastschutzkupplung zwischen einem Ausgang der ersten Überlastschutzkupplung und dem Nabenelement wirkend eingesetzt ist. Folglich ist nun eine zweite Überlastschutzkupplung in Reihe zu der bisherigen ersten Überlastschutzkupplung eingesetzt. Auch die zweite Überlastschutzkupplung ist selbstverständlich so ausgeführt, dass sie unterhalb eines Grenzwertes eines zu übertragenden Drehmomentes permanent geschlossen ist und oberhalb dieses Grenzwertes, zumindest bei einem impulshaften Auftreten des zu übertragenden Drehmomentes, insbesondere im Zugbetrieb, eine Relativverdrehung zwischen dem Ausgang und dem Nabenelement freigibt.

Dies hat den Vorteil, dass eine Überlastschutzkupplung, hier die erste Überlastschutzkupplung, möglichst nahe an dem Dämpfungsmechanismus des Federdämpfers, sprich den Dämpferfedern, eingesetzt ist und eine andere Überlastschutzkupplung, hier die zweite Überlastschutzkupplung, möglichst nahe an der Getriebeeingangswelle eingesetzt ist. Dadurch wird sowohl ein verlässlicher Schutz der Getriebeeingangswelle, als auch des Dämpfungsmechanismus des Federdämpfers erzielt. Ferner ist es als positiv herauszustellen, dass die Dämpferfedern gegenüber bisherigen bekannten Varianten gar schwächer und folglich kompakter ausgebildet werden können.

Weitergehende vorteilhafte Ausführungsformen sind mit den Unteransprüchen beansprucht und nachfolgend näher erläutert.

Um die Drehmomentbelastung weiter zu reduzieren, wird es ebenfalls als vorteilhaft angesehen, wenn das Sekundärteil ein unmittelbar in Umfangsrichtung an einer Dämpferfeder abgestütztes Flanschelement aufweist, welches Flanschelement wiederum unmittelbar einen Eingang der ersten Überlastschutzkupplung bildet.

Die Überlastschutzkupplungen sind zudem möglichst einfach herstellbar, wenn der Ausgang der ersten Überlastschutzkupplung durch ein mehrteiliges Trägersegment gebildet ist und zugleich einen Eingang der zweiten Überlastschutzkupplung bildet.

Von Vorteil ist es auch, wenn das Trägersegment einen ersten Scheibenbereich und einen mit dem ersten Scheibenbereich verbundenen zweiten Scheibenbereich aufweist, wobei das Sekundärteil, vorzugsweise das Flanschelement, axial zwischen dem ersten Scheibenbereich und dem zweiten Scheibenbereich eingespannt ist. Weiter bevorzugt sind der erste Scheibenbereich und der zweite Scheibenbereich jeweils als ein Blechelement / aus einem Metallblech ausgeformt. Dadurch lassen sich die Scheibenbereiche möglichst einfach herstellen.

Für eine möglichst effektive Wirkung der ersten Überlastschutzkupplung ist es zuträglich, wenn der erste Scheibenbereich und der zweite Scheibenbereich jeweils einen an dem Sekundärteil (direkt) anliegenden Reibbelag aufnehmen.

Die Herstellung wird weiter vereinfacht, wenn sowohl der erste Scheibenbereich als auch der zweite Scheibenbereich jeweils durch ein einzelnes Blech gebildet sind, die im Bereich der Reibbeläge, unter Aufnahme des Flanschelementes, axial beabstandet sind und radial innerhalb der Reibbeläge miteinander in Kontakt befindlich sind / axial aneinander abgestützt sind und dort vorzugsweise über eine Nietverbindung unmittelbar miteinander verbunden sind. Dies ermöglicht eine effiziente Montage sowie Befestigung der beiden ersten und zweiten Scheibenbereiche aneinander.

Steht der erste Scheibenbereich zusätzlich über eine Reibeinrichtung mit dem Primärteil in Kontakt, wird die Dämpfungswirkung des Federdämpfers weiter verbessert.

Des Weiteren ist es von Vorteil, wenn das Trägersegment einen dritten Scheibenbereich aufweist, der mit dem zweiten Scheibenbereich verbunden ist, wobei das Nabenelement axial zwischen dem zweiten Scheibenbereich und dem dritten Scheibenbereich eingespannt ist. Weiter bevorzugt ist auch der dritte Scheibenbereich durch ein einzelnes Blech ausgebildet, das mit dem Blech des zweiten Scheibenbereiches unmittelbar verbunden ist. Dadurch werden die Montage und der Aufbau der zweiten Überlastschutzkupplung ebenfalls positiv beeinflusst.

Diesbezüglich ist es weiterhin vorteilhaft, wenn der zweite Scheibenbereich und der dritte Scheibenbereich bzw. die diesen zweiten und dritten Scheibenbereiche bildenden Bleche radial außerhalb mehrerer Reibbeläge der zweiten Überlastschutzkupplung unmittelbar aneinander anliegen und dort vorzugsweise über eine Vernietung aneinander befestigt sind.

Demnach ist es auch von Vorteil, wenn der zweite Scheibenbereich und der dritte Scheibenbereich jeweils einen an dem Nabenelement anliegenden Reibbelag aufnehmen.

Des Weiteren betrifft die Erfindung einen Antriebsstrang für ein Kraftfahrzeug, mit einem erfindungsgemäßen Federdämpfer nach zumindest einen der zuvor beschriebenen Ausführungen, wobei das Primärteil mit einer Abtriebswelle eines Motors verbunden ist und das Nabenelement mit einer Getriebeeingangswelle verbunden ist.

In anderen Worten ausgedrückt, ist somit erfindungsgemäß ein Federdämpfer, vorzugsweise in der Form eines Bogenfederdämpfers, realisiert, der eine erste, radial äußere Rutschkupplung (erste Überlastschutzkupplung), die nahe der Bogenfedern (Dämpferfedern) angeordnet ist und eine zweite, radial innere Rutschkupplung (zweite Überlastschutzkupplung), die nahe der Abtriebswelle (d. h. nahe der Getriebeeingangswelle) angeordnet ist, aufweist. Beide Rutschkupplungen sind in Reihe geschaltet und so abgestimmt, dass sowohl der Bogenfederflansch (Flanschelement) als auch die Getriebeeingangswelle im Impactfall jeweils mit sehr geringem Massenträgheitsmoment rutschen können.

Die Erfindung wird nun nachfolgend anhand einer Figur näher erläutert.

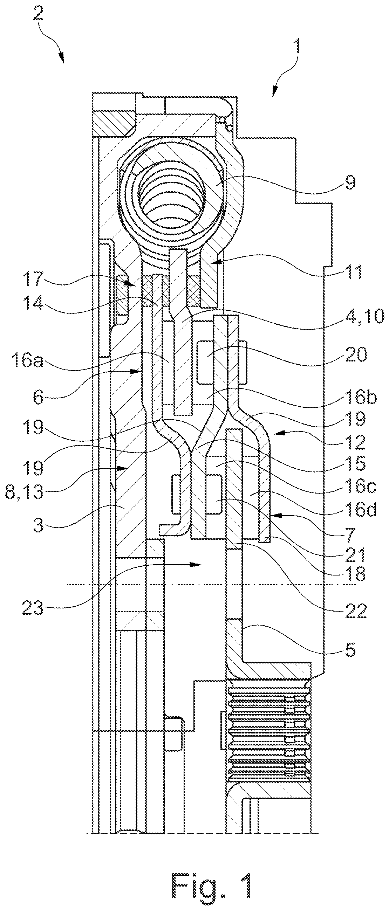

Es zeigt die einzige Fig. 1 eine Längsschnittdarstellung eines erfindungsgemäßen Federdämpfers nach einem bevorzugten Ausführungsbeispiel, wobei der nähere Aufbau zweier eingesetzter Überlastschutzkupplungen gut zu erkennen ist.

Der in Fig. 1 dargestellte erfindungsgemäße Federdämpfer 1 ist im Betrieb in einem prinzipiell angedeuteten Antriebsstrang 2 eines Kraftfahrzeuges, hier einem hybriden Antriebsstrang 2, eingesetzt. Der Federdämpfer 1 ist wirkend zwischen einer hier der Übersichtlichkeit halber nicht weiter dargestellten Abtriebswelle eines Motors, vorzugsweise eines Verbrennungsmotors, und einer Getriebeeingangswelle eines Getriebes wirkend eingesetzt. Der Federdämpfer 1 dient folglich zum Dämpfen bestimmter Drehmomentspitzen, die zwischen dem Motor und dem Getriebe im Betrieb auftreten.

Der Federdämpfer 1 nach Fig. 1 weist einerseits ein gehäuseartiges Primärteil 3 auf, das im Betrieb bevorzugt unmittelbar mit dem der Übersichtlichkeit halber nicht weiter dargestellten Abtriebswelle des Motors drehfest verbunden ist. Neben dem Primärteil weist der Federdämpfer 1 andererseits ein relativ zu dem Primärteil 3 federgedämpft verdrehbar aufgenommenes Sekundärteil 4 auf. Primärteil 3 und Sekundärteil 4 sind auf übliche Weise mittels mehrerer in Umfangsrichtung verteilt angeordneter Dämpferfedern 9, hier in Form von Bogenfedern, federgedämpft relativ zueinander abgestützt.

Neben der federnden Abstützung des Primärteils 3 zu dem Sekundärteil 4 durch die Dämpferfedern 9 dient eine zusätzlich vorhandene Reibeinrichtung 17 zum Erzeugen der notwendigen Dämpfungswirkung, d. h. der Umwandlung der Bewegungsenergie in Abwärme. Die Reibeinrichtung 17 ist zwischen dem Primärteil 3 und dem Sekundärteil 4 wirksam eingesetzt und wirkt hemmend auf deren Relativverdrehung.

Das Sekundärteil 4 ist im Wesentlichen durch ein Flanschelement 10 gebildet, das sich von einem mit den Dämpferfedern 9 in Kontakt befindlichen Bereich aus radial nach innen weg erstreckt. An dem Flanschelement 10 ist unmittelbar eine erste Überlastschutzkupplung 6 angeordnet / eingesetzt. Das Flanschelement 10 bildet somit unmittelbar einen Eingang 11 der ersten Überlastschutzkupplung 6 aus und ist über zwei (erste und zweite) Reibbeläge 16a, 16b mit einem Ausgang 8 der ersten Überlastschutzkupplung 6 wirkverbunden. Die erste Überlastschutzkupplung 6 ist als übliche Rutschkupplung realisiert, die unterhalb eines bestimmten Grenzwertes eines zu übertragenden Drehmomentes permanent geschlossen ist und dabei das Flanschelement 10 permanent drehfest durch Reibschluss mit dem Ausgang 8 der ersten Überlastschutzkupplung 6 verbindet und bei Überschreiten dieses Grenzwertes, insbesondere bei Auftreten eines Drehmomentimpulses oberhalb des Grenzwertes eine Relativverdrehung zwischen dem Flanschelement 10 und dem Ausgang 8 der ersten Überlastschutzkupplung 6 freigibt / ermöglicht.

Hinsichtlich des Ausgangs 8 der ersten Überlastschutzkupplung 6 ist weiterhin gezeigt, dass dieser durch ein mehrteiliges Trägersegment 12 mit ausgebildet wird. Das Trägersegment 12 weist einen ersten Scheibenbereich 14 und einen mit diesem fest verbundenen zweiten Scheibenbereich 15 auf. Erster Scheibenbereich 14 und zweiter Scheibenbereich 15 sind radial innerhalb des ersten Reibbelages 16a und des zweiten Reibbelages 16b miteinander, unter Ausbildung eines axialen Absatzes 19 je (erstem und zweitem) Scheibenbereich 14, 15, zueinander geführt und aneinander in Anlage. Die beiden ersten und zweiten Scheibenbereiche 14, 15 sind in diesem Kontaktbereich über eine erste Vernietung 20 miteinander verbunden.

Radial außerhalb dieser ersten Vernietung 20, durch die Ausbildung des Absatzes 19, sind die beiden Scheibenbereiche 14, 15 wiederum axial voneinander beabstandet und nehmen axial zwischen sich das Flanschelement 10, unter Zwischenschaltung des jeweiligen Reibbelages 16a, 16b, auf. Das Flanschelement 10 ist somit zwischen den beiden Scheibenbereichen 14, 15 eingespannt.

Hinsichtlich des ersten Scheibenbereiches 14 ist zudem ersichtlich, dass dieser radial außerhalb der Reibbeläge 16a, 16b weitergeführt ist und einen Bestandteil der Reibeinrichtung 17 mit ausbildet. Der erste Scheibenbereich 14 befindet sich somit ebenfalls in reibendem Kontakt mit dem Primärteil 3.

Das Trägersegment 12 bildet zugleich einen Eingang 13 der zweiten Überlastschutzkupplung 7 aus, sodass die zweite Überlastschutzkupplung 7 in Reihe zu der ersten Überlastschutzkupplung 6 angeordnet ist. Auf einer dem ersten Scheibenbereich 14 abgewandten axialen Seite des zweiten Scheibenbereiches 15 ist dazu an diesem zweiten Scheibenbereich 15 ein dritter Scheibenbereich 18 befestigt. Die Verbindung des zweiten Scheibenbereiches 15 mit dem dritten Scheibenbereich 18 erfolgt über eine weitere (zweite) Vernietung 21. Die zweite Vernietung 21 ist in dieser Ausführung radial auf gleicher Höhe mit dem ersten und dem zweiten Reibbelag 16a, 16b angeordnet.

Radial innerhalb der zweiten Vernietung 21 sind die zweiten und dritten Scheibenbereiche 15, 18 durch die jeweilige Ausbildung des Absatzes 19, axial beabstandet zueinander und nehmen axial zwischen sich ein Nabenelement 5 bzw. einen Flanschbereich 22 des Nabenelementes 5 auf. Es sei darauf hingewiesen, dass die erste Vernietung 20 in radialer Höhe auf Höhe des dritten und vierten Reibbelages 16c, 16d liegt.

Die Einspannung des Flanschbereiches 22 zwischen dem zweiten Scheibenbereich 15 und dem dritten Scheibenbereich 18 erfolgt auf ähnliche Weise wie die Einspannung des Flanschelementes 10 zwischen dem ersten Scheibenbereich 14 und dem dritten Scheibenbereich 18. Folglich ist der Flanschbereich 22 unter Zwischenschaltung eines dritten Reibbelages 16c und eines vierten Reibbelages 16d axial zwischen dem zweiten Scheibenbereich 15 und dem dritten Scheibenbereich 18 eingespannt.

Die Funktion der zweiten Überlastschutzkupplung 7 ist ähnlich zu der ersten Überlastschutzkupplung 6. Bei Überschreiten eines bestimmten Grenzwertes eines zu übertragenden Drehmomentes / Drehmomentimpulses öffnet sich die zweite Übelastschutzkupplung 7 selbsttätig und ermöglicht somit ein Verdrehen des Nabenelementes 5 relativ zum Trägersegment 12 und folglich relativ zum Sekundärteil 4, wohingegen unterhalb dieses Grenzwertes eine drehfeste Verbindung zwischen dem Nabenelement 5 und dem Trägersegment 12 vorliegt. Das Nabenelement 5 bildet folglich einen Ausgang 23 der zweiten Überlastschutzkupplung 7.

Die dritten und vierten Reibbeläge 16c, 16d liegen radial innerhalb der ersten und zweiten Reibbeläge 16a, 16b. Zudem ist die die ersten und zweiten Reibbeläge 16a, 16b aufweisende Reibbelagsgruppe zumindest teilweise axial überlappend mit der die dritten und vierten Reibbeläge 16c, 16d aufweisende Reibbelagsgruppe angeordnet.

Hinsichtlich der Scheibenbereiche 14, 15, 18 sei zudem darauf hingewiesen, dass diese jeweils aus einem Metallblech ausgeformt sind. Hierbei sind die Absätze 19 bevorzugt kaltumformtechnisch hergestellt.

Mit anderen Worten ausgedrückt, ist erfindungsgemäß ein Dämpfer (Federdämpfer 1) mit doppeltem Drehmomentbegrenzer (erste und zweite Überlastschutzkupplung 6, 7) umgesetzt. Dabei gibt es einen Drehmomentbegrenzer (zweite Überlastschutzkupplung 7), der die Getriebeeingangswelle schützt und einen Weiteren (erste Überlastschutzkupplung 6), der die Bogenfedern (Dämpferfedern 9) schützt.

Das Konzept ist wie folgt aufgebaut: Die Nabe (Nabenelement 5) dient als sich drehendes Teil im Drehmomentbegrenzer. Sie wird zwischen zwei Kupplungsbeläge (dritte und vierte Reibbeläge 16c, 16d) platziert, sodass die Rutschfunktion bei einem Impact gewährleistet werden kann. Die Kupplungsbeläge sind an den Trägerblechen (zweiter Scheibenbereich 15 und dritter Scheibenbereich 18) montiert. Die Trägerbleche sind miteinander über eine Vernietung (zweite Vernietung 21) verbunden. Diese Teile bilden den jenen (zweiten) Drehmomentbegrenzer, der zum Schutz des Getriebes dient.

Das Trägerblech (zweiter Scheibenbereich 15) ist an dem Trägerblech (erster Scheibenbereich 14) über eine Vernietung (erste Vernietung 20) verbunden. Die zwei Kupplungsbeläge (erste und zweite Reibbeläge 16a, 16b) sind an den Trägerblechen (erster Scheibenbereich 14 und zweiter Scheibenbereich 15) montiert. Zwischen den beiden Kupplungsbelägen (erste und zweite Reibbeläge 16a, 16b) befindet sich der Bogenfederflansch (Flanschelement 10). Dieser dient als sich drehendes Teil im Drehmomentbegrenzer, sodass die Rutschfunktion bei einem Impact gewährleistet werden kann. Diese Teile bilden den (ersten) Drehmomentbegrenzer der die Bogenfedern des Dämpfers schützt.

Beide Drehmomentbegrenzer sind miteinander über das Trägerblech (zweiter Scheibenbereich 15) verbunden und bilden im normalen Zugbetrieb das ein und dasselbe Teil (starre Verbindung). Im Zugbetrieb wirkt also das Massenträgheitsmoment der Teile 5, 18, 15, 20, 16c, 16d, 14, 21, 16a, 16b, 10 an der Getriebeeingangswelle.

Im Falle eines Impacts (z.B. bei einer Notbremsung) können die Getriebeeingangswelle und die Nabe mit sehr geringem Massenträgheitsmoment an der Getriebeeingangswelle rutschen. Parallel kann auch der Bogenfederflansch separat mit sehr geringem Massenträgheitsmoment an der Bogenfeder rutschen. Dieses Konzept erlaubt es optimale und weiche Bogenfederkennlinien mit optimaler Schutzfunktion auszulegen.

### Bezugszeichenliste

- 1: Federdämpfer
- 2: Antriebsstrang
- 3: Primärteil
- 4: Sekundärteil
- 5: Nabenelement
- 6: erste Überlastschutzkupplung
- 7: zweite Überlastschutzkupplung
- 8: Ausgang der ersten Überlastschutzkupplung
- 9: Dämpferelement
- 10: Flanschelement
- 11: Eingang der ersten Überlastschutzkupplung
- 12: Trägersegment
- 13: Eingang der zweiten Überlastschutzkupplung
- 14: erster Scheibenbereich
- 15: zweiter Scheibenbereich
- 16a: erster Reibbelag
- 16b: zweiter Reibbelag
- 16c: dritter Reibbelag
- 16d: vierter Reibbelag
- 17: Reibeinrichtung
- 18: dritter Scheibenbereich
- 19: Absatz
- 20: erste Vernietung
- 21: zweite Vernietung
- 22: Flanschbereich
- 23: Ausgang der zweiten Überlastschutzkupplung

## Patentansprüche

1. Federdämpfer (1) für einen Kraftfahrzeugantriebsstrang (2), mit einem Primärteil (3), einem relativ zu dem Primärteil (3) federgedämpft verdrehbar aufgenommenen Sekundärteil (4) und einer, zwischen dem Sekundärteil (4) und einem Nabenelement (5) wirkend eingesetzten, ersten Überlastschutzkupplung (6), die unterhalb eines Grenzwertes eines zu übertragenden Drehmomentes permanent geschlossen ist und oberhalb dieses Grenzwertes, zumindest bei einem impulshaften Auftreten des zu übertragenden Drehmomentes, eine Relativverdrehung zwischen dem Sekundärteil (4) und dem Nabenelement (5) freigibt, **dadurch gekennzeichnet, dass** radial innerhalb der ersten Überlastschutzkupplung (6) eine zweite Überlastschutzkupplung (7) zwischen einem Ausgang (8) der ersten Überlastschutzkupplung (6) und dem Nabenelement (5) wirkend eingesetzt ist.

2. Federdämpfer (1) nach Anspruch 1, **dadurch gekennzeichnet, dass** das Sekundärteil (4) ein unmittelbar in Umfangsrichtung an einer Dämpferfeder (9) abgestütztes Flanschelement (10) aufweist, welches Flanschelement (10) wiederum unmittelbar einen Eingang (11) der ersten Überlastschutzkupplung (6) bildet.

3. Federdämpfer (1) nach Anspruch 1 oder 2, **dadurch gekennzeichnet, dass** der Ausgang (8) der ersten Überlastschutzkupplung (6) durch ein mehrteiliges Trägersegment (12) gebildet ist und zugleich einen Eingang (13) der zweiten Überlastschutzkupplung (7) bildet.

4. Federdämpfer (1) nach einem der Ansprüche 1 bis 3, **dadurch gekennzeichnet, dass** das Trägersegment (12) einen ersten Scheibenbereich (14) und einen mit dem ersten Scheibenbereich (14) verbundenen zweiten Scheibenbereich (15) aufweist, wobei das Sekundärteil (4) axial zwischen dem ersten Scheibenbereich (14) und dem zweiten Scheibenbereich (15) eingespannt ist.

5. Federdämpfer (1) nach Anspruch 4, **dadurch gekennzeichnet, dass** der erste Scheibenbereich (14) und der zweite Scheibenbereich (15) jeweils einen an dem Sekundärteil (4) anliegenden Reibbelag (16a, 16b) aufnehmen.

6. Federdämpfer (1) nach Anspruch 4 oder 5, **dadurch gekennzeichnet, dass** der erste Scheibenbereich (14) zusätzlich über eine Reibeinrichtung (17) mit dem Primärteil (3) in Kontakt steht.

7. Federdämpfer (1) nach einem der Ansprüche 4 bis 6, **dadurch gekennzeichnet, dass** das Trägersegment (12) einen dritten Scheibenbereich (18) aufweist, der mit dem zweiten Scheibenbereich (15) verbunden ist, wobei das Nabenelement (5) axial zwischen dem zweiten Scheibenbereich (15) und dem dritten Scheibenbereich (18) eingespannt ist.

8. Federdämpfer (1) nach Anspruch 7, **dadurch gekennzeichnet, dass** der zweite Scheibenbereich (15) und der dritte Scheibenbereich (18) jeweils einen an dem Nabenelement (5) anliegenden Reibbelag (16c, 16d) aufnehmen.

9. Antriebsstrang (2) für ein Kraftfahrzeug, mit einem Federdämpfer (1) nach einem der Ansprüche 1 bis 8, wobei das Primärteil (3) mit einer Abtriebswelle eines Motors verbunden ist und das Nabenelement (5) mit einer Getriebeeingangswelle verbunden ist.

## Claims

1. A spring damper (1) for a motor vehicle powertrain (2), having a primary part (3), a secondary part (4) that is rotatably received relative to the primary part (3) in a spring-damped manner, and a first overload protection coupling (6) that is operatively inserted between the secondary part (4) and a hub element (5) and is permanently closed below a limit value of a torque to be transmitted and that, above this limit value, at least in the event of a sudden occurrence of the torque to be transmitted, releases a relative rotation between the secondary part (4) and the hub element (5), **characterised in that** a second overload protection coupling (7) is operatively inserted radially inside the first overload protection coupling (6) between an output (8) of the first overload protection coupling (6) and the hub element (5).

2. The spring damper (1) according to claim 1, **characterised in that** the secondary part (4) has a flange element (10) that is supported directly in the circumferential direction on a damper spring (9), which flange element (10) in turn directly forms an input (11) of the first overload protection coupling (6).

3. The spring damper (1) according to claim 1 or 2, **characterised in that** the output (8) of the first overload protection coupling (6) is formed by a multi-part support segment (12) and at the same time forms an input (13) of the second overload protection coupling (7).

4. The spring damper (1) according to any one of claims 1 to 3, **characterised in that** the support segment (12) has a first disc region (14) and a second disc region (15) connected to the first disc region (14), wherein the secondary part (4) is clamped axially between the first disc region (14) and the second disc region (15).

5. The spring damper (1) according to claim 4, **characterised in that** the first disc region (14) and the second disc region (15) each receive a friction lining (16a, 16b) resting on the secondary part (4).

6. The spring damper (1) according to claim 4 or 5, **characterised in that** the first disc region (14) is additionally in contact with the primary part (3) via a friction device (17).

7. The spring damper (1) according to any one of claims 4 to 6, **characterised in that** the support segment (12) has a third disc region (18) that is connected to the second disc region (15), wherein the hub element (5) is clamped axially between the second disc region (15) and the third disc region (18).

8. The spring damper (1) according to claim 7, **characterised in that** the second disc region (15) and the third disc region (18) each receive a friction lining (16c, 16d) resting on the hub element (5).

9. A powertrain (2) for a motor vehicle, having a spring damper (1) according to any one of claims 1 to 8, wherein the primary part (3) is connected to an output shaft of a motor and the hub element (5) is connected to a transmission input shaft.

## Revendications

1. Amortisseur à ressort (1) pour une chaîne cinématique (2) de véhicule automobile, comportant une partie primaire (3), une partie secondaire (4) logée de manière à pouvoir tourner par rapport à la partie primaire (3) en étant amortie par un ressort, et, inséré de manière active entre la partie secondaire (4) et un élément moyeu (5), un premier embrayage de protection contre les surcharges (6) qui est fermé en permanence en dessous d'un seuil d'un couple à transmettre et, au-dessus de ce seuil, au moins lorsque le couple à transmettre se produit par impulsions, libère une rotation relative entre la pièce secondaire (4) et l'élément moyeu (5), **caractérisé en ce qu'**un second embrayage de protection contre les surcharges (7) est inséré de manière active radialement à l'intérieur du premier embrayage de protection contre les surcharges (6) entre une sortie (8) du premier embrayage de protection contre les surcharges (6) et l'élément moyeu (5).

2. Amortisseur à ressort (1) selon la revendication 1, **caractérisé en ce que** la partie secondaire (4) présente un élément bride (10) qui s'appuie directement dans la direction circonférentielle sur un ressort d'amortisseur (9), lequel élément bride (10) forme à son tour directement une entrée (11) du premier embrayage de protection contre les surcharges (6).

3. Amortisseur à ressort (1) selon la revendication 1 ou 2, **caractérisé en ce que** la sortie (8) du premier embrayage de protection contre les surcharges (6) est formée par un segment porteur (12) en plusieurs parties et forme en même temps une entrée (13) du second embrayage de protection contre les surcharges (7).

4. Amortisseur à ressort (1) selon l'une des revendications 1 à 3, **caractérisé en ce que** le segment porteur (12) présente une première zone de disque (14) et une deuxième zone de disque (15) reliée à la première zone de disque (14), dans lequel la partie secondaire (4) est serrée axialement entre la première zone de disque (14) et la deuxième zone de disque (15).

5. Amortisseur à ressort (1) selon la revendication 4, **caractérisé en ce que** la première zone de disque (14) et la deuxième zone de disque (15) logent respectivement une garniture de friction (16a, 16b) reposant sur la partie secondaire (4).

6. Amortisseur à ressort (1) selon la revendication 4 ou 5, **caractérisé en ce que** la première zone de disque (14) est en outre en contact avec la partie primaire (3) par l'intermédiaire d'un dispositif de friction (17).

7. Amortisseur à ressort (1) selon l'une des revendications 4 à 6, **caractérisé en ce que** le segment porteur (12) présente une troisième zone de disque (18) qui est reliée à la deuxième zone de disque (15), dans lequel l'élément moyeu (5) est serré axialement entre la deuxième zone de disque (15) et la troisième zone de disque (18).

8. Amortisseur à ressort (1) selon la revendication 7, **caractérisé en ce que** la deuxième zone de disque (15) et la troisième zone de disque (18) logent respectivement une garniture de friction (16c, 16d) reposant sur l'élément moyeu (5).

9. Chaîne cinématique (2) pour un véhicule automobile, comportant un amortisseur à ressort (1) selon l'une des revendications 1 à 8, dans laquelle la partie primaire (3) est reliée à un arbre de sortie d'un moteur et l'élément moyeu (5) est relié à un arbre d'entrée de transmission.
